# FASCICULE DE BREVET EUROPEEN

(11) **EP 3 340 369 B1**
(45) Date de publication et mention de la délivrance du brevet: **10.11.2021**
(21) Numéro de dépôt: 17208742.1
(22) Date de dépôt: 20.12.2017
(51) Int. Cl.: H01P 1/04, H01Q 1/08, H01Q 1/28, H01P 5/02, H04B 7/185, H01Q 21/06, H01Q 19/17, H01Q 21/00

(54) **ARCHITECTURE DE BLOC SOURCES DÉPLOYABLE, ANTENNE COMPACTE ET SATELLITE COMPORTANT UNE TELLE ARCHITECTURE**
AUFBAU EINES AUFKLAPPBAREN QUELLENBLOCKS, KOMPAKTANTENNE UND SATELLIT, DER EINEN SOLCHEN AUFBAU BESITZT
ARCHITECTURE FOR DEPLOYABLE SOURCE BLOCK, COMPACT ANTENNA AND SATELLITE COMPRISING SUCH AN ARCHITECTURE

(30) Priorité: 20.12.2016 FR 1601813
(43) Date de publication de la demande: 27.06.2018
(73) Titulaire: Thales, 92400 Courbevoie (FR)
(72) Inventeur: FERRANDO, Nicolas, 31170 Tournefeuille (FR); BROSSIER, Jérôme, 31470 Fonsorbes (FR); LAFOND, Jean-Christophe, 31120 Portet Sur Garonne (FR); LORENZO, Jérôme, 31880 La Salvetat Saint Gilles (FR)
(74) Mandataire: Marks & Clerk France

(56) Documents cités:
- FR-A1- 2 374 754
- JP-A- 2009 190 661
- US-A1- 2007 200 780
- US-A1- 2012 154 585
- US-A1- 2016 218 408
- RAHIMINEJAD SOFIA ET AL: "Polymer Gap Adapter for Contactless, Robust, and Fast Measurements at 220-325 GHz", JOURNAL OF MICROELECTROMECHANICAL SYSTEMS, IEEE SERVICE CENTER, US, vol. 25, no. 1, 1 février 2016 (2016-02-01), pages 160-169, XP011597857, ISSN: 1057-7157, DOI: 10.1109/JMEMS.2015.2500277 [extrait le 2016-02-01]

## Description

La présente invention concerne une architecture de bloc sources déployable, une antenne compacte et un satellite comportant une telle architecture. Elle s'applique à tout type d'antenne, multi-faisceaux ou mono-faisceau, comportant un réseau de sources RF, et destinée à être implantée dans un encombrement réduit.

Actuellement, les antennes comportent des sources radiofréquences RF montées dans une position prédéterminée qui reste fixe pendant toute la durée de vie de l'antenne. Lorsque l'antenne doit être aménagée sur un satellite, les sources RF sont généralement montées sur une face du satellite. Cependant, dans le cas des antennes multifaisceaux, les sources RF sont aménagées en réseaux de dimensions de plus en plus volumineuses, ce qui pose des problèmes d'aménagement sur les satellites, en particulier lors du lancement, car le volume disponible sous la coiffe des lanceurs est restreint. Ce problème d'aménagement est particulièrement important dans le cas d'une antenne multi-faisceaux qui utilise un grand nombre de sources RF pour former des couvertures multi-spots.

Pour résoudre ce problème, les solutions connues consistent à miniaturiser les différents composants radiofréquences constituant les sources RF, de façon à en diminuer l'encombrement, les sources RF restant toujours montées dans une position fixe sur une face du satellite. Cependant la miniaturisation des sources RF est limitée par des conditions de taille minimale à respecter pour atteindre des performances radiofréquences souhaitées, les conditions de taille s'appliquant notamment aux guides d'onde des chaînes radiofréquences RF et au cornet rayonnant de chaque source RF.

Le document FR 2 374 754 A1 décrit une antenne de satellite comprenant un réflecteur rabattable sur le satellite. Le document US 2016/218408 A1 décrit un système d'alimentation pour une structure déployable. Le document US 2007/200780 A1 décrit un système pour rabattre et pour déployer une antenne réseau à commande de phase et des réflecteurs. Le document JP 2009 190661 A décrit un couvercle de protection pour un appareil optique monté sur un satellite. Le document « *Polymer Gap adapter for contactless, robust, and fast measurements* *at 220-325 GHz* », (Rahiminejad et al., Journal of Microelectromechanical Systems, vol. 25, no. 1, 1er février 2016, pages 160-169) décrit un adaptateur d'ouverture de guide d'ondes. Le document US 2012/154585 A1 décrit un système de déploiement d'une antenne, qui peut être logée dans le corps d'un microsatellite.

Le but de l'invention est de remédier aux inconvénients des antennes connues et de réaliser une architecture de bloc sources déployable comportant un réseau de sources RF qui puisse être stocké dans une zone non gênante sur le satellite et qui puisse ainsi atteindre une taille plus importante sans poser de problème d'aménagement sur le satellite.

Pour cela, l'invention concerne une architecture de bloc sources déployable comportant un support et un réseau de sources radiofréquences RF, chaque source RF étant constituée d'une chaîne radiofréquence RF et d'un élément rayonnant, la chaîne RF étant munie de ports d'entrée/sortie. L'architecture comporte un panneau déployable articulé en rotation autour d'un axe de rotation, le réseau de sources RF étant monté sur le panneau déployable, le panneau déployable étant mobile en rotation entre une première position de stockage du réseau de sources RF sur le support et une deuxième position dans laquelle le réseau de sources RF est déployé.

L'architecture comporte en outre des jonctions radiofréquences RF sans contact, chaque jonction RF étant constituée de deux parties distinctes, respectivement une première bride de connexion montée sur le panneau déployable et une deuxième bride de connexion montée sur le support, la première bride de connexion étant reliée à un port d'entrée/sortie d'une source RF, la deuxième bride de connexion étant destinée, dans la deuxième position déployée, à coopérer sans contact avec la première bride de connexion pour assurer une liaison RF sans contact.

La première bride de connexion comporte une première plaque métallique dans laquelle est aménagé un premier orifice traversant, la deuxième bride de connexion comporte une deuxième plaque métallique dans laquelle est aménagé un deuxième orifice traversant et, au moins l'une des deux brides de connexion comporte une pluralité de plots métalliques transversaux répartis périodiquement sur la plaque métallique correspondante, les plots métalliques délimitant un canal RF de communication entre le premier orifice traversant et le deuxième orifice traversant lorsque le réseau de sources RF est en position déployée.

Avantageusement, le premier orifice traversant et le deuxième orifice traversant sont décalés l'un par rapport à l'autre, de façon à ce que le canal RF de communication comprenne une portion de canal parallèle à la première plaque métallique et à la deuxième plaque métallique.

Avantageusement, la première bride de connexion peut comporter une première pluralité de plots métalliques transversaux et la deuxième bride de connexion peut comporter une deuxième pluralité de plots métalliques transversaux, les plots métalliques respectifs des première et deuxième brides de connexion de chaque jonction RF se correspondant deux à deux.

Avantageusement, en position déployée, pour chaque jonction RF, la première bride de connexion peut être placée en regard de la deuxième bride de connexion en laissant subsister un jeu entre les première et deuxième brides de connexion correspondantes.

L'invention concerne aussi une antenne compacte et un satellite comportant une telle architecture de bloc sources.

D'autres particularités et avantages de l'invention apparaîtront clairement dans la suite de la description donnée à titre d'exemple purement illustratif et non limitatif, en référence aux dessins schématiques annexés qui représentent :

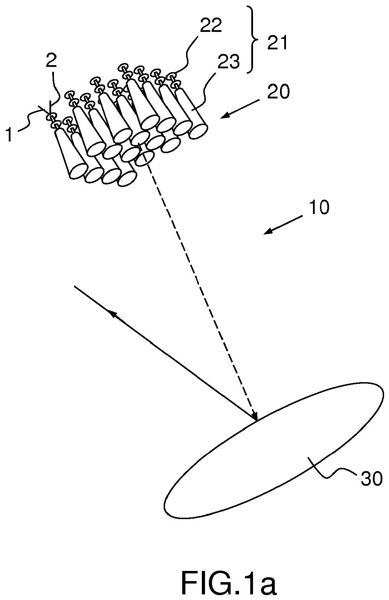

- figure 1: un schéma d'un exemple d'antenne comportant une pluralité de sources RF en position déployée, selon l'invention ;
- figures 2a et 2b : deux schémas, en coupe transversale, d'un premier exemple de configuration d'une architecture de bloc sources, respectivement en position stockée et en position déployée, selon l'invention ;
- figure 3 : un schéma en perspective, d'un exemple d'aménagement des ports d'entrée/sortie des sources RF dans la deuxième zone d'un panneau déployable, selon l'invention;
- figure 4 : un schéma d'un exemple d'aménagement des sources RF sur un panneau déployable, selon l'invention;
- figures 5a et 5b : deux schémas, respectivement en position déployée et stockée, d'un premier exemple de jonction RF sans contact, selon l'invention ;
- figures 6a et 6b: deux schémas, respectivement en position déployée et stockée, d'un deuxième exemple de jonction RF sans contact, selon l'invention ;
- figures 7a et 7b: deux schémas, respectivement en position déployée et stockée, d'un troisième exemple de jonction RF sans contact, selon l'invention ;
- figure 8: un schéma de détail, illustrant un exemple d'aménagement matriciel de plusieurs jonctions RF, selon l'invention ;
- figures 9a et 9b: deux schémas, en coupe transversale, d'un deuxième exemple de configuration d'une architecture de bloc sources, respectivement en position stockée et en position déployée, selon l'invention ;
- figures 10a et 10b: deux schémas, en coupe transversale, d'un troisième exemple de configuration d'une architecture de bloc sources, respectivement en position stockée et en position déployée, selon l'invention ;
- figures 11a et 11b: deux schémas, en coupe transversale, d'un quatrième exemple de configuration d'une architecture de bloc sources, respectivement en position stockée et en position déployée, selon l'invention.

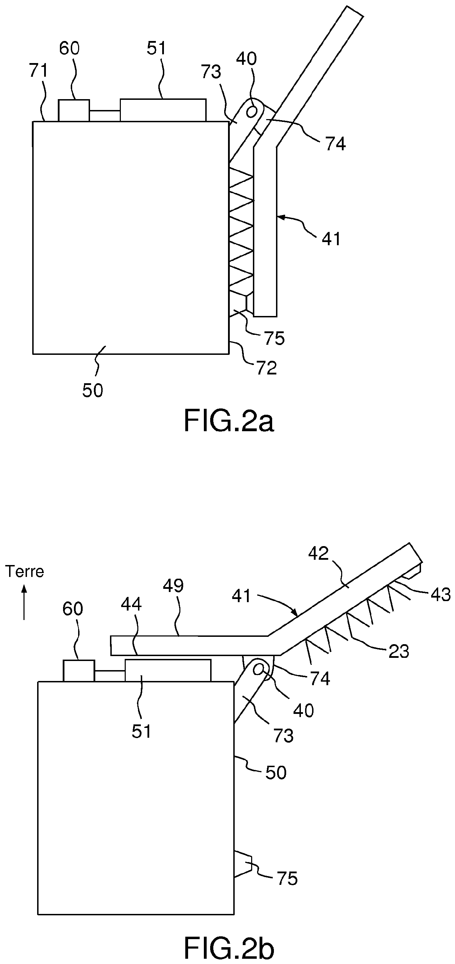

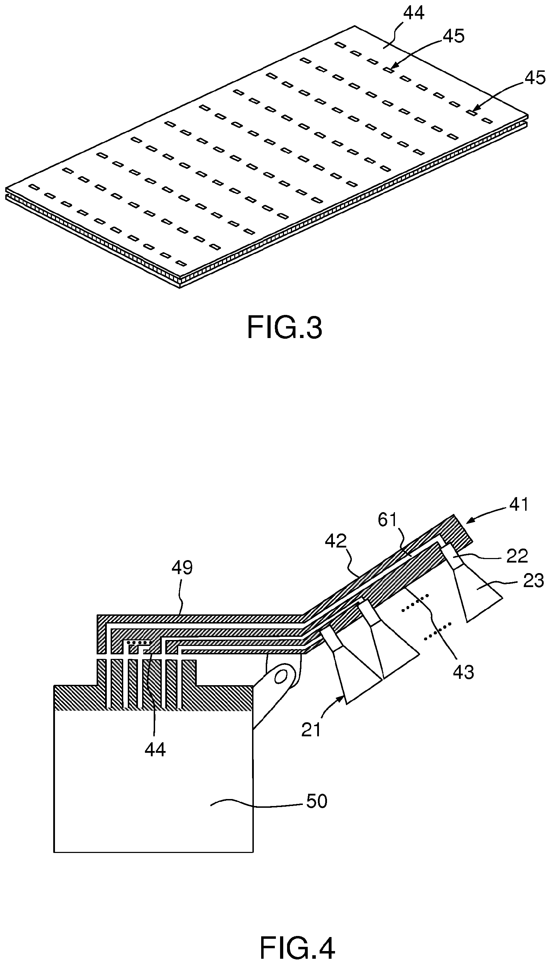

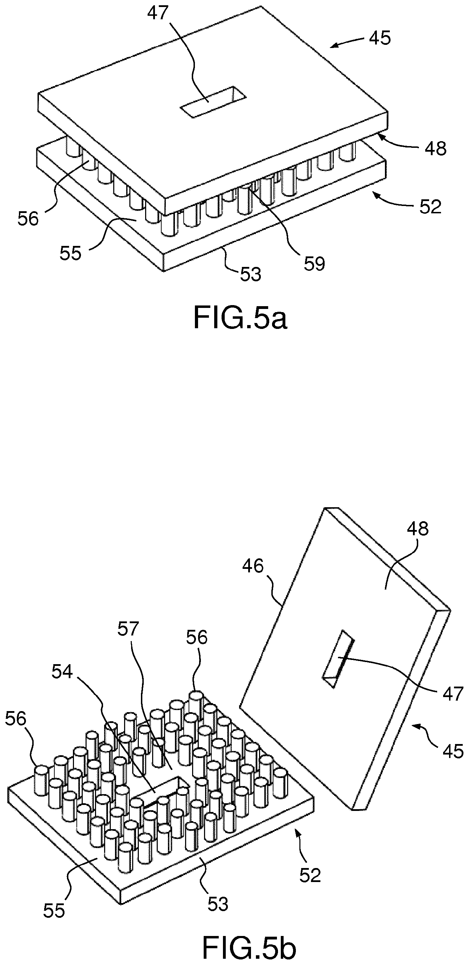

L'antenne 10 représentée sur la figure la comporte un réseau 20 de plusieurs sources radiofréquences RF 21 placées devant un réflecteur 30. Chaque source RF 21 est constituée d'une chaîne RF 22 et d'un élément rayonnant 23 connecté à la chaîne RF, l'élément rayonnant pouvant, par exemple, être un cornet. Chaque chaîne RF comporte des ports d'entrée/sortie 1, 2 destinés à être reliés à un dispositif d'émission et de réception de signaux. Selon l'invention, comme représenté par exemple sur les figures 2a et 2b, l'architecture de bloc sources comporte une première partie mobile en rotation autour d'un axe de rotation 40 et une deuxième partie statique montée sur un support 50, la première partie étant destinée, dans une position de stockage, à être éloignée de la deuxième partie et dans une position de fonctionnement, à coopérer avec la deuxième partie pour assurer des liaisons radiofréquences. La première partie de l'architecture de bloc sources est constituée d'un panneau 41 déployable dans lequel sont aménagées les sources RF 21. Le panneau 41 déployable comporte deux zones distinctes, la première zone 42 comportant une surface de rayonnement 43 sur laquelle sont aménagés les cornets rayonnants 23 de toutes les sources RF et la deuxième zone 49 comportant une surface de connexion 44 sur laquelle sont aménagées des premières brides de connexion, représentées en détail dans les exemples illustrés sur les figures 5a, 5b, 6a, 6b, 7a, 7b, 8, respectivement reliées aux ports d'entrée/sortie des sources RF par l'intermédiaire de guides d'onde 61 représentés sur la figure 4. Chaque port d'entrée/sortie 1, 2 est en effet relié à une première bride de connexion apte à coopérer avec une deuxième bride de connexion, complémentaire de la première bride de connexion, pour assurer une jonction RF entre la source RF 21 correspondante et un dispositif d'émission/réception 60 monté sur le support 50. Comme représenté sur la figure 3, les premières brides de connexion 45 associées aux ports d'entrée/sortie des différentes sources RF peuvent par exemple, être aménagées les unes à côté des autres sur la surface de connexion 44, selon une matrice à deux dimensions. Comme représenté par exemple sur la figure 4, les chaînes RF 22 des différentes sources RF sont intégrées dans le panneau 41 et reliées aux guides d'onde 61 routés à l'intérieur du panneau déployable depuis les cornets rayonnants 23 jusqu'aux premières brides de connexion correspondantes. Le panneau 41 peut par exemple être constitué d'une plaque métallique usinée. La deuxième partie statique de l'architecture de bloc sources est constituée du support 50 et d'une plaque de connexion dans laquelle les deuxièmes brides de connexion sont aménagées, la plaque de connexion 51 étant fixée sur le support 50.

Selon l'invention, le panneau 41 déployable est articulé autour d'un axe de rotation 40 et est mobile en rotation entre une première position de stockage du bloc sources sur le support 50 et une deuxième position où le bloc sources est déployé. Pour permettre la rotation du panneau 41 déployable, comme représenté par exemple sur les figures 2a et 2b, l'axe de rotation 40 peut être l'axe d'un arbre monté dans des ferrures 73, 74 respectivement solidaires du support 50 et du panneau 41. Dans la position stockée, le panneau déployable peut être verrouillé sur le support par un premier dispositif de verrouillage 75. Après déverrouillage du panneau déployable, le déploiement du bloc sources est assuré par un mécanisme d'entraînement en rotation du panneau, non représenté, le mécanisme d'entraînement en rotation pouvant être, par exemple, un actionneur rotatif électrique solidaire de l'arbre ou un mécanisme d'entraînement passif comme par exemple un ressort. Un deuxième dispositif de verrouillage, non représenté, peut être utilisé pour assurer le verrouillage du bloc sources en position déployée. Un actionneur rotatif électrique présente l'avantage d'assurer à lui seul, une fonction de guidage en rotation et une fonction d'entraînement en rotation. Il est également possible d'utiliser un actionneur rotatif électrique comportant un moteur à pas fixe, par exemple un moteur pas à pas, et dans ce cas, le deuxième dispositif de verrouillage n'est pas indispensable et peut être supprimé. Par contre, dans le cas de l'utilisation d'un mécanisme de rotation passif, le mécanisme de rotation doit être associé à un dispositif de guidage en rotation, par exemple des roulements ou une rotule ou tout autre dispositif assurant un guidage en rotation.

Comme représenté sur les figures 5a, 5b, 6a, 6b, 7a, 7b, pour assurer des connexions radiofréquences entre chaque source RF 21 et un dispositif 60 d'émission/réception de signaux monté sur le support 50, l'architecture de bloc sources comporte, en position déployée, des jonctions radiofréquences RF sans contact, chaque jonction RF étant constituée d'une première bride de connexion 45 montée sur le panneau 41 et d'une deuxième bride de connexion 46 montée dans la plaque de connexion 51 fixée sur le support 50, la deuxième bride de connexion 52 étant complémentaire de la première bride de connexion 45. Dans la première position stockée, pour chaque source RF 21, la deuxième bride de connexion 52 est éloignée de la première bride de connexion 45 et aucune communication RF ne peut être établie entre les sources RF 21 et le dispositif d'émission/réception 60. Dans la deuxième position déployée, pour chaque source RF 21, la deuxième bride de connexion 52 est disposée en face de la première bride de connexion 45 en laissant subsister un jeu 59 entre les deux brides 45, 52 correspondantes. Dans la position déployée, la première bride de connexion 45 et la deuxième bride de connexion 52 coopèrent entre elles sans contact et assurent une liaison RF sans contact entre la source RF 21 correspondante et le dispositif d'émission/réception de signaux 60 monté sur le support 50.

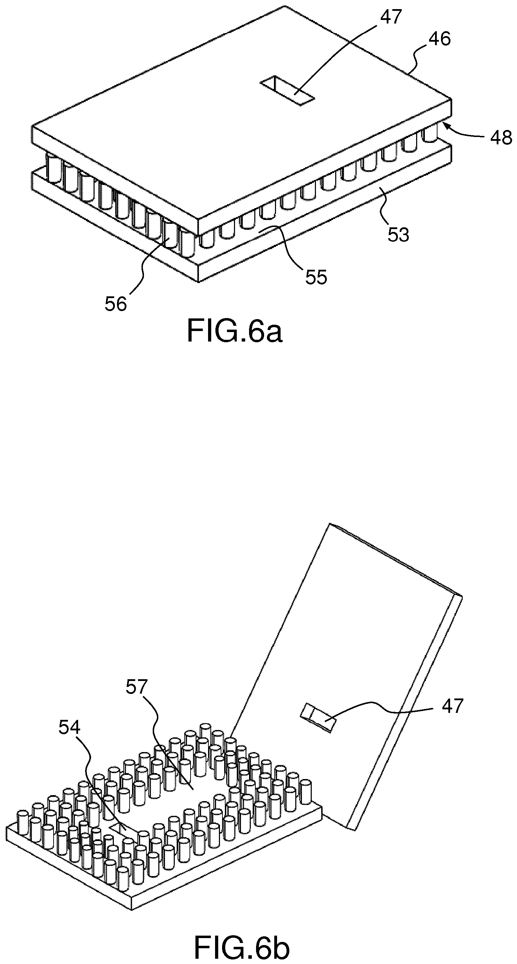

Trois exemples de jonction RF conformes à l'invention, sont représentés sur les figures 5a, 5b, 6a, 6b, 7a, 7b. Sur les figures 5a, 6a, 7a, la jonction RF est en position de fonctionnement, les deux brides de connexion 45, 52 de la jonction RF étant placées en face l'une de l'autre mais sans contact entre elles, ce qui correspond à la position déployée du panneau 41. Sur les figures 5b, 6b, 7b les deux brides de connexion 45, 52 de la jonction RF sont éloignées l'une de l'autre, ce qui correspond à la position stockée, ou à une position intermédiaire en cours de déploiement, du panneau 41. La première bride de connexion 45 de la jonction RF comporte une première plaque métallique 46 au travers de laquelle est aménagé un premier orifice traversant 47 raccordé à un port d'entrée/sortie 1, 2 d'une source RF 21. La deuxième bride de connexion 52 de la jonction RF comporte une deuxième plaque métallique 53 au travers de laquelle est aménagé un deuxième orifice traversant 54 destiné à être relié au dispositif d'émission/réception 60. Sur le premier exemple illustré sur les figures 5a et 5b, et sur le deuxième exemple représenté sur les figures 6a et 6b, seule l'une des deux plaques métalliques, par exemple la deuxième plaque métallique 53, de la jonction RF comporte une face interne 55 munie d'une pluralité de plots métalliques transversaux 56 répartis périodiquement autour de l'orifice traversant 54 correspondant. Alternativement, les plots métalliques peuvent être aménagés sur la surface interne 48 de la première bride de connexion. Dans une position de fonctionnement, les deux brides de connexion 45, 52 de la jonction RF sont placées en regard l'une de l'autre en laissant subsister un jeu 59 entre les deux brides de connexion de sorte qu'il n'y ait aucun contact entre les deux brides de connexion 45, 52 de la jonction RF. Lorsque le réseau de sources RF est en position déployée, les plots métalliques 56 constituent des murs électromagnétiques délimitant un canal de communication RF 57 situé au centre de la jonction RF, le canal de communication RF 57 reliant le premier orifice 47 et le deuxième orifice 54 de la jonction RF, le canal RF ne comportant pas de plots métalliques. Le premier orifice 47 et le deuxième orifice 54 d'une jonction RF peuvent être aménagés en regard l'un de l'autre comme sur les figures 5a, 5b, ou être décalés longitudinalement l'un par rapport à l'autre comme représenté dans le deuxième exemple de jonction RF illustré sur les figures 6a et 6b. Si les deux orifices de la jonction RF sont aménagés en regard l'un de l'autre, le canal RF 57 est perpendiculaire aux deux plaques métalliques 46, 53 de la jonction RF. Si les deux orifices 47, 54 de la jonction RF sont décalés longitudinalement l'un par rapport à l'autre, le canal RF 57 comporte une portion de canal parallèle aux deux plaques métalliques 46, 53 de la jonction RF. Les deux orifices 47, 54 de la jonction RF sont dits décalés longitudinalement dès lors qu'ils ne sont pas aménagés en regard l'un de l'autre, et que le canal 57 comprend une portion de canal parallèle aux deux plaques métalliques 46, 53 de la jonction RF. Ce décalage longitudinal permet d'accroitre la tolérance sur le positionnement relatif des deux plaques métalliques 46, 53. Sur le premier exemple illustré sur les figures 5a et 5b et sur le deuxième exemple illustré sur les figures 6a et 6b, les plots métalliques sont aménagés sur une seule des deux plaques métalliques de la jonction RF. Les plots métalliques présentent l'avantage de canaliser les ondes électromagnétiques en limitant les fuites. En outre, comme les première et deuxième brides de connexion en regard ne comportent aucun contact, les jonctions RF présentent un bon découplage thermique.

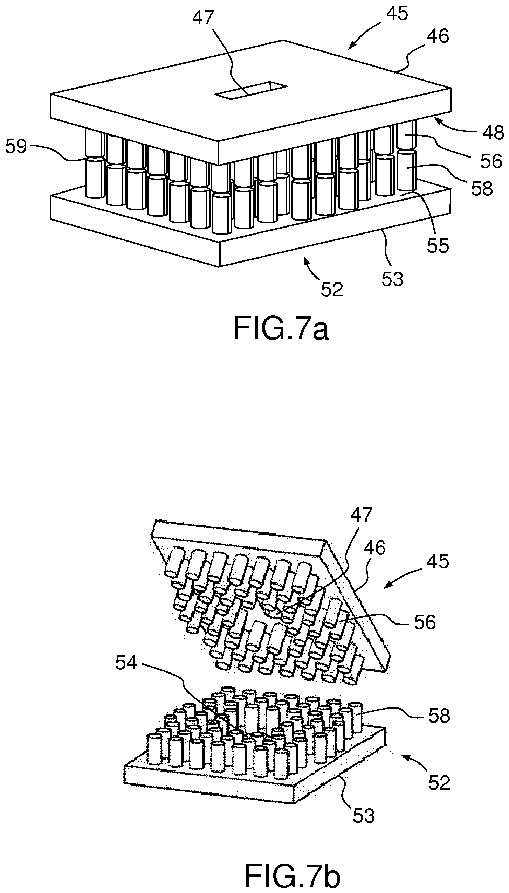

Alternativement, les plots métalliques peuvent être aménagés sur les deux plaques métalliques 46, 53 de la jonction RF, comme représenté dans le troisième exemple illustré sur les figures 7a et 7b. Dans ce troisième exemple, la première et la deuxième plaque métallique 46, 53 de la jonction RF comportent une face interne 48, 55 respective munie d'une pluralité de plots métalliques transversaux 56, 58 répartis périodiquement autour de l'orifice traversant 47, 54 correspondant. Dans une position déployée, les plots métalliques 56, 58 des deux brides de connexion 45, 52 de la jonction RF se correspondent deux à deux en laissant subsister un jeu 59 entre les deux brides de connexion 45, 52 de sorte que les plots 56 de la première bride de connexion 45 ne soient pas en contact avec les plots 58 de la deuxième bride de connexion 52. Les plots métalliques 56, 58 peuvent par exemple être fabriqués par moulage ou par un procédé de fabrication additive.

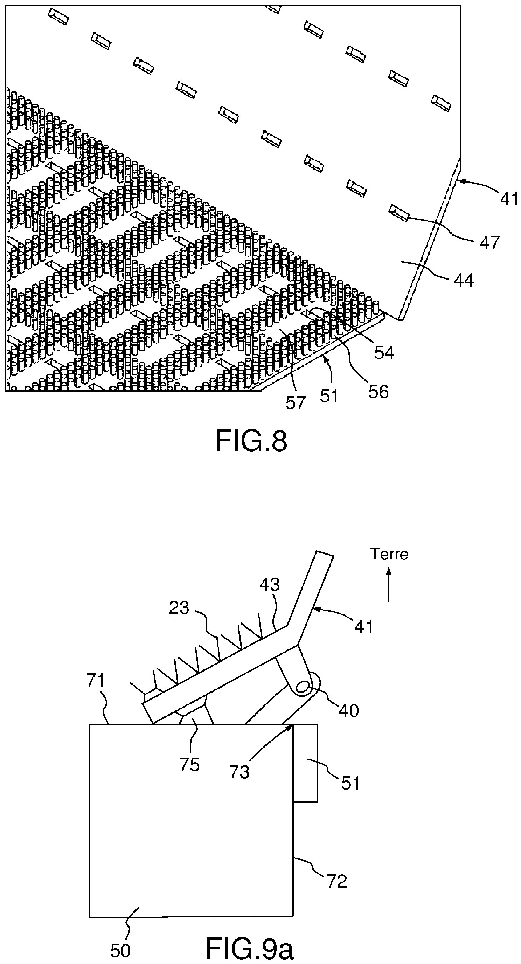

Puisque le bloc sources comporte un réseau de plusieurs sources RF, un grand nombre de jonctions RF sont nécessaires pour réaliser l'ensemble des connexions entre les ports d'entrée/sortie des chaînes RF de chaque source RF et le dispositif d'émission/réception 60. Selon l'invention, toutes les jonctions RF nécessaires aux connexions de toutes les sources RF peuvent être aménagées selon une matrice à deux dimensions, comme représenté sur la vue partielle illustrée sur la figure 8 dans laquelle les premières et les deuxièmes brides de connexion des jonctions RF sont séparées et éloignées l'une de l'autre. Les premières brides de connexion sont aménagées sur le panneau déployable 41 et les deuxièmes brides de connexion sont aménagées sur une plaque de connexion 51 solidaire du support 50. Chaque jonction RF a une structure conforme aux exemples illustrés sur les figures 5a et 5b, mais bien entendu, les jonctions RF peuvent alternativement comporter une structure conforme aux exemples illustrés sur les figures 6a et 6b ou aux exemples illustrés sur les figures 7a et 7b. L'utilisation d'une structure conforme aux exemples illustrés sur les figures 6a et 6b procure un avantage lors de la fabrication du panneau déployable 41 et de la plaque de connexion 51. En effet, le décalage longitudinal, dans chaque jonction RF, de l'orifice 47 vis-à-vis de l'orifice 54 confère une tolérance dans le positionnement relatif du panneau déployable 41 vis à vis de la plaque de connexion 51. Par ailleurs, ce décalage permet d'obtenir une tolérance dans le positionnement de l'orifice 47 dans le panneau déployable 41, ainsi que dans le positionnement de l'orifice 54 dans la plaque de connexion 51.

Le support 50 de l'architecture de bloc sources peut, par exemple, être constitué par la caisse d'un satellite. Différentes configurations de l'architecture de bloc sources sont représentées en position stockée sur les figures 2a, 9a, 10a et 11a, et en position déployée sur les figures 2b, 9b, 10b, 11b.

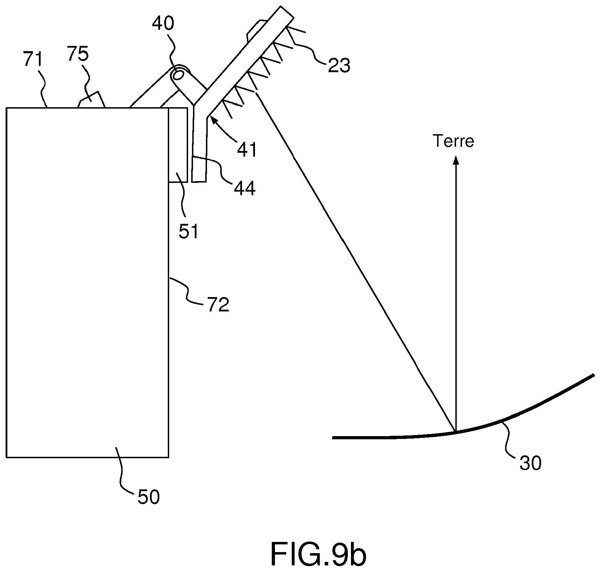

Sur les figures 9a et 9b, en position stockée, le panneau 41 est verrouillé par un dispositif de verrouillage 75 fixé sur une première face 71 d'un satellite 50, par exemple une face orientée vers la Terre appelée face Terre. Les cornets rayonnants 23 des sources RF sont aménagés sur une surface avant 43 du panneau 41, les premières brides de connexion sont aménagées sur une surface de connexion 44 située sur une surface arrière du panneau 41 et les deuxièmes brides de connexion sont montées sur la plaque de connexion 51 montée sur une deuxième face 72 du satellite 50, la deuxième face 72 pouvant être par exemple, une face latérale. Après déverrouillage, le panneau 41 bascule en rotation autour de l'axe de rotation 40 jusqu'à ce que ce que les premières brides de connexion montées sur le panneau 41 soient disposées en regard des deuxièmes brides de connexion montées sur la deuxième face 72. Dans cette configuration, l'axe de rotation 40 du panneau 41 est localisé au niveau de l'arête 73 de la caisse du satellite 50 située entre la première face 71 et la deuxième face 72.

Les figures 2a et 2b correspondent à une configuration inversée par rapport à la configuration des figures 9a et 9b, le panneau 41 en position stockée étant verrouillé sur la deuxième face 72 correspondant à une face latérale du satellite. Les cornets rayonnants 23 et les premières brides de connexion des sources RF sont montées sur une surface avant 43 du panneau 41. et les deuxièmes brides de connexion sont montées sur la plaque de connexion 51 montée sur la première face 71 du satellite 50 orientée vers la Terre.

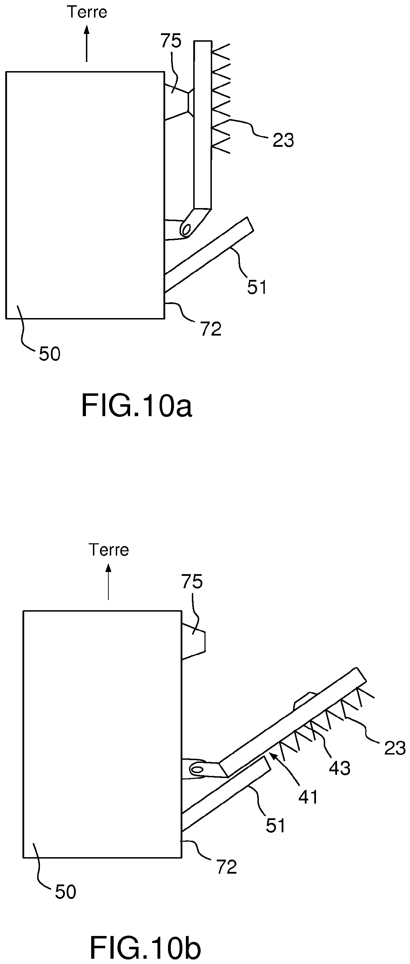

Sur les figures 10a et 10b, les cornets rayonnants 23 et les premières brides de connexion des sources RF sont aménagés sur une surface avant 43 du panneau 41 et les deuxièmes brides de connexion sont montées sur une plaque de connexion 51 fixée obliquement sur la deuxième face 72 orientée vers la Terre. En position stockée, le panneau 41 est verrouillé sur la deuxième face 72 orientée vers la Terre par le dispositif de verrouillage 75. Après déverrouillage, le panneau 41 bascule en rotation jusqu'à ce que ce que les premières brides de connexion montées sur le panneau 41soient disposées en regard des deuxièmes brides de connexion montées sur la plaque de connexion 51fixée obliquement sur la deuxième face 72.

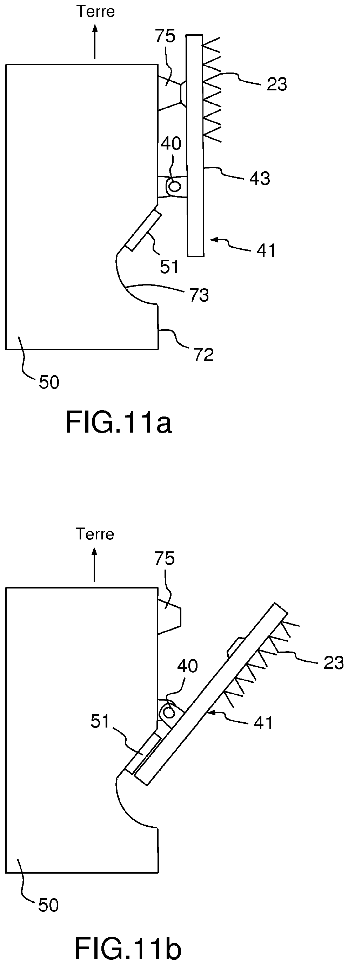

Sur les figures 11a et 11b, les cornets rayonnants 23 des sources RF sont aménagés sur une surface avant 43 du panneau 41, les premières brides de connexion sont aménagées sur une surface arrière du panneau 41 et les deuxièmes brides de connexion sont montées sur la plaque de connexion 51, la plaque de connexion 51 étant fixée dans une encoche 73 de la deuxième face 72 correspondant à une face latérale du satellite 50. Après déverrouillage, le panneau 41 bascule en rotation jusqu'à ce que ce que les premières brides de connexion montées sur le panneau 41 soient disposées en regard des deuxièmes brides de connexion montées sur la plaque de connexion 51 fixée dans l'encoche 73.

## Revendications

1. Architecture de bloc sources déployable comportant un support (50) et un réseau de sources radiofréquences RF (21), chaque source RF (21) étant constituée d'une chaîne radiofréquence RF (22) et d'un élément rayonnant (23), la chaîne RF(22) étant munie de ports d'entrée/sortie (1, 2), l'architecture comportant un panneau (41) déployable articulé en rotation autour d'un axe de rotation (40), le réseau de sources RF (21) étant monté sur le panneau (41), le panneau (41) étant mobile en rotation entre une première position de stockage du réseau de sources RF (21) sur le support (50) et une deuxième position dans laquelle le réseau de sources RF (21) est déployé, **caractérisée en ce qu'**elle comporte en outre des jonctions radiofréquences RF sans contact, chaque jonction RF étant constituée de deux parties distinctes, respectivement une première bride de connexion (45) montée sur le panneau (41) et une deuxième bride de connexion (52) montée sur le support (50), la première bride de connexion (45) étant reliée à un port d'entrée/sortie (1, 2) d'une source RF (21), la deuxième bride de connexion (52) étant configurée pour, dans la deuxième position déployée, coopérer sans contact avec la première bride de connexion (45) pour assurer une liaison RF sans contact, la première bride de connexion (45) comportant une première plaque métallique (46) dans laquelle est aménagé un premier orifice traversant (47), la deuxième bride de connexion (52) comportant une deuxième plaque métallique (53) dans laquelle est aménagé un deuxième orifice traversant (54) au moins l'une des deux brides de connexion (45, 52) comportant une pluralité de plots métalliques transversaux (56) répartis périodiquement sur la plaque métallique correspondante, les plots métalliques (56) délimitant un canal RF de communication entre le premier orifice traversant (54) et le deuxième orifice traversant (47) lorsque le réseau de sources RF (21) est en position déployée.

2. Architecture de bloc sources selon la revendication 1, **caractérisée en ce que** le premier orifice traversant (47) et le deuxième orifice traversant (54) sont décalés l'un par rapport à l'autre, de façon à ce que le canal RF de communication comprenne une portion de canal parallèle à la première plaque métallique (46) et à la deuxième plaque métallique (53).

3. Architecture de bloc sources selon l'une des revendications 1 ou 2, **caractérisée en ce que** la première bride de connexion (46) comporte une première pluralité de plots métalliques transversaux (56), **en ce que** la deuxième bride de connexion comporte une deuxième pluralité de plots métalliques transversaux (58), et **en ce que** les plots métalliques (56, 58) respectifs des première et deuxième brides de connexion (45, 52) de chaque jonction RF se correspondent deux à deux.

4. Architecture de bloc sources selon l'une des revendications 1 à 3, **caractérisée en ce que**, en position déployée, pour chaque jonction RF, la première bride de connexion (45) est placée en regard de la deuxième bride de connexion (52) en laissant subsister un jeu (59) entre les première et deuxième brides de connexion correspondantes.

5. Antenne compacte **caractérisée en ce qu'**elle comporte une architecture de bloc sources déployable, selon l'une des revendications précédentes.

6. Satellite caractérisé en qu'il comporte une architecture de bloc sources déployable, selon l'une des revendications 1 à 4, le support (50) étant constitué par une face du satellite.

## Patentansprüche

1. Aufbau eines entfaltbaren Quellenblocks, aufweisend eine Stütze (50) und ein Netz von Hochfrequenzquellen RF (21), wobei jede RF-Quelle (21) aus einer Hochfrequenzkette RF (22) und einem Strahlelement (23) besteht, wobei die RF-Kette (22) mit Eingangs-/Ausgangsanschlüssen (1, 2) versehen ist, wobei der Aufbau eine entfaltbare Platte (41) einschließt, welche gelenkig drehbar um eine Rotationsachse (40) angeordnet ist, wobei das Netz von RF-Quellen (21) an der Platte (41) montiert ist, wobei die Platte (41) in Rotation zwischen einer ersten Lagerungsposition der RF-Quellen (21) an der Stütze (50) und einer zweiten Position beweglich ist, in welcher das Netz von RF-Quellen (21) entfaltet ist, **dadurch gekennzeichnet, dass** er ferner kontaktlose RF-Hochfrequenzverbindungen aufweist, wobei jede RF-Verbindung aus zwei unterschiedlichen Teilen besteht, jeweils einem ersten Anschlussflansch (45), welcher an der Platte (41) montiert ist, und einem zweiten Anschlussflansch (52), welcher an der Stütze (50) montiert ist, wobei der erste Anschlussflansch (45) mit einem Eingangs- /Ausgangsanschuss (1, 2) einer RF-Quelle (21) verbunden ist, wobei der zweite Anschlussflansch (52) konfiguriert ist, um, in der zweiten, entfalteten Position, kontaktlos mit dem ersten Anschlussflansch (45) zusammenzuarbeiten, um eine kontaktlose RF-Verbindung herzustellen, wobei der erste Anschlussflansch (45) eine erste Metallplatte (46) aufweist, in welcher eine erste Durchgangsöffnung (47) geschaffen ist, wobei der zweite Anschlussflansch (52) eine zweite Metallplatte (53) aufweist, in welcher eine zweite Durchgangsöffnung (54) geschaffen ist, wobei mindestens einer der beiden Anschlussflansche (45, 52) eine Vielzahl von Metallhöckern in Querrichtung (56) umfasst, welche periodisch auf der entsprechenden Metallplatte verteilt sind, wobei die Metallhöcker (56) einen RF-Kommunikationskanal zwischen der ersten Durchgangöffnung (54) und der zweiten Durchgangsöffnung (47) abgrenzen, wenn das Netz von RF-Quellen (21) sich in der entfalteten Position befindet.

2. Aufbau eines Quellenblocks nach Anspruch 1, **dadurch gekennzeichnet, dass** die erste Durchgangsöffnung (47) und die zweite Durchgangsöffnung (54) zueinander dergestalt versetzt sind, dass der RF-Kommunikationskanal einen Kanalabschnitt umfasst, welcher parallel zur ersten Metallplatte (46) und zur zweiten Metallplatte (53) ist.

3. Aufbau eines Quellenblocks nach einem der Ansprüche 1 oder 2, **dadurch gekennzeichnet, dass** der erste Anschlussflansch (46) eine erste Vielzahl von Metallhöckern in Querrichtung (56) aufweist, dass der zweite Anschlussflansch eine zweite Vielzahl von Metallhöckern in Querrichtung (58) aufweist, und dadurch dass die jeweiligen Metallhöcker (56, 58) des ersten und des zweiten Anschlussflansches (45, 52) einer jeden RF-Verbindung einander paarweise entsprechen.

4. Aufbau eines Quellenblocks nach einem der Ansprüche 1 bis 3, **dadurch gekennzeichnet, dass**, in der entfalteten Position, bei jeder RF-Verbindung, der erste Anschlussflansch (45) dem zweiten Anschlussflansch (52) gegenüber platziert ist, wobei ein Spiel (59) zwischen dem jeweiligen ersten und zweiten Anschlussflansch belassen wird.

5. Kompaktantenne, **dadurch gekennzeichnet, dass** sie einen Aufbau von entfaltbaren Quellenblöcken nach einem der vorhergehenden Ansprüche aufweist.

6. Satellit, **dadurch gekennzeichnet, dass** er einen Aufbau von entfaltbaren Quellenblöcken nach einem der Ansprüche 1 bis 4 umfasst, wobei die Stütze (50) aus einer Seite des Satelliten gebildet wird.

## Claims

1. A deployable feed cluster architecture having a support (50) and an array of radiofrequency RF sources (21), each RF source (21) consisting of a radiofrequency RF chain (22) and of a radiating element (23), the RF chain (22) being provided with input/output ports (1, 2), the architecture including a deployable panel (41) that is rotatably articulated about an axis of rotation (40), the array of RF sources (21) being mounted on the panel (41), the panel (41) being rotatably movable between a first position in which the array of RF sources (21) is stowed on the support (50) and a second position in which the array of RF sources (21) is deployed, **characterised in that** it further has contactless radiofrequency RF junctions, each RF junction consisting of two separate parts, respectively a first connecting flange (45) mounted on the panel (41) and a second connecting flange (52) mounted on the support (50), the first connecting flange (45) being linked to an input/output port (1, 2) of an RF source (21), the second connecting flange (52) being configured to, in the second deployed position, cooperate in a contactless manner with the first connecting flange (45) to provide a contactless RF link, the first connecting flange (45) having a first metal plate (46) in which a first through orifice (47) is arranged, the second connecting flange (52) having a second metal plate (53) in which a second through orifice (54) is arranged, wherein at least one of the two connecting flanges (45, 52) has a plurality of transverse metal pads (56) that are distributed periodically over the corresponding metal plate, the metal pads (56) delimiting an RF communication channel between the first through orifice (54) and the second through orifice (47) when the array of RF sources (21) is in the deployed position.

2. The feed cluster architecture according to claim 1, **characterised in that** the first through orifice (47) and the second through orifice (54) are offset with respect to one another, such that the RF communication channel comprises a channel portion that is parallel to the first metal plate (46) and to the second metal plate (53).

3. The feed cluster architecture according to either of claims 1 or 2, **characterised in that** the first connecting flange (46) has a first plurality of transverse metal pads (56), **in that** the second connecting flange has a second plurality of transverse metal pads (58), and **in that** the respective metal pads (56, 58) of the first and second connecting flanges (45, 52) of each RF junction correspond to each other pairwise.

4. The feed cluster architecture according to one of claims 1 to 3, **characterised in that**, in the deployed position, for each RF junction, the first connecting flange (45) is placed facing the second connecting flange (52) while leaving a clearance (59) between the corresponding first and second connecting flanges.

5. A compact antenna, **characterised in that** it has a deployable feed cluster architecture according to one of the preceding claims.

6. A satellite, **characterised in that** it has a deployable feed cluster architecture according to one of claims 1 to 4, the support (50) consisting of a face of the satellite.
